# EUROPEAN PATENT SPECIFICATION

(11) **EP 4 442 119 B1**
(45) Date of publication and mention of the grant of the patent: **18.03.2026**
(21) Application number: 24167929.9
(22) Date of filing: 29.03.2024
(51) Int. Cl.: A21C 9/06

(54) **ROTARY EMPANADA MACHINE**
ROTIERENDE EMPANADA-MASCHINE
MACHINE ROTATIVE À EMPANADA

(30) Priority: 31.03.2023 US 202318129127; 13.02.2024 US 202418440427
(43) Date of publication of application: 09.10.2024
(73) Proprietor: Mesa-Arias, Emma Eugenia, Manizales (CO)
(72) Inventor: Mesa-Arias, Emma Eugenia, Manizales (CO)
(74) Representative: Kenny, Andrew

(56) References cited:
- JP-A- 2003 169 640
- US-A- 3 379 139
- US-A- 3 633 517
- US-A- 4 517 785
- US-A- 4 608 919
- US-B2- 9 504 260

## Description

### Field of the Invention

The present invention relates to a system and method for a rotary empanada machine and to the production of empanadas.

### Background

Traditional turnovers (e.g. Empanadas, Arepas, Empanadillas, Pastelitos, Bolones, Papas rellenas, etc.) as well as processed vegetables (e.g. patacones, tostones, etc.) are baked or fried food items that are typically mechanically processed combinations of various edible parts. Turnovers are typically comprised of a wrapper or skin usually made of from one or various flours (including corn, wheat, cassava (aka Yuca), potato, rice, quinoa, oatmeal, plantain, banana, centeno, flax, etc.), wrapped around internal fillings made from one or more of beef, pork, chicken, cheese, grains, vegetables, etc., and seasoned with various spices. Processed veggies like patacones are made from pieces of vegetables like plantain, breadfruit, etc. that are pressed/moulded into a desired shape.

While traditionally hand-made, more and more machines have been devised to facilitate all or parts of the preparation processing of turnovers and/or patacones. These processes include kneading the flour and then flattening with wooden or plastic rollers, before finally assembling them by flattening the dough and placing in the center a portion of the filling before covering the filling by typically folding the flattened dough. The 'closing' is typically accomplished by pressing them with your hand on their edges and then cutting the excess dough also with your hand or with a circular containers or moulds. Manual manufacturing is for small productions because a lot of time is invested per unit.

Publication US-A-3633517 (Chung-Chin Kao) discloses an automatic egg roll making machine comprising an intermittently moving belt, a dough supplier for placing a thin continuous dough sheet on said belt, a hopper for depositing egg roll stuffing on said dough sheet, a cutter for cutting egg roll dough sheet sections with the stuffing thereon from the dough sheet, a folding means for folding two side edges of each cut station over the stuffing and making and elongate egg roll master, a forming fork for shaping the stuffing portion of said master into form for rolling, and a roll former to roll the master into a final egg roll form.

Publication JP-A-2003169640 (Kashima Toshimasa) discloses a machine for wrapping an edible shell around a filling of food. The machine comprises a plate-shaped moulding die having a rectangular opening of a housing for folding opposing portions of the edible shell thereby wrapping the shell around the filling.

Publication US-B2-9504260 (John C. Waltz) discloses a multi-stage rotary food product folder apparatus for forming a folded food product. The apparatus comprises six self-contained assembly stations on a platform. The platform can be rotated to move each station. A cam system folds a tortilla around a filling of foo on the platform.

For the production of empanadas on a large scale, various automated machines have been designed and manufactured, including those covered in US Pat. No. 9,357,788. However, in many situations, it is desired to automate only the most repetitive portions of the process while allowing the more efficient (and lower cost) manual operations to continue.

### Summary of the Invention

According to aspects of the invention there are an empanada manufacturing system, an empanada protector sheet, and an empanada manufacturing method as disclosed by the claims.

The invention relates to a rotary machine for the production of empanadas, comprising a plurality of empanada creation and holding stations within a rotating deck on which the empanadas are moulded and folded through manual, electric and pneumatic motors, and actuators. The invention may include changeable moulds for moulding and cutting the empanada dough, as well as empanada protector sheets which may be disposable.

According to an aspect of the invention there is empanada manufacturing system comprising: a base holding both a support structure and a turntable that is rotatable with respect to the base and support structure; a plurality of empanada protector sheets; wherein said turntable has a deck surface divided into at least four work areas, each said work area having a sheet holder to hold one of the empanada protector sheets on the deck surface of the respective work area; a flattening mechanism to flatten empanada dough on the deck surface, said flattening mechanism mounted on said support structure over one of the work areas; a mould pressing mechanism to mould the empanada dough on the deck surface, said mould pressing mechanism mounted on said support structure over another of the work areas; and control components to rotate the turntable to advance the work areas to the location of the next work area in the direction of rotation and then operate the flattening mechanism and mould pressing mechanism in repetitive sequence, said control components comprising a brake that automatically arrests rotation of the turntable after each work area advances to the location of the next work area in the direction of rotation, characterised in that the empanada protector sheets are substantially triangular pie shaped the size of the work areas, comprising a flap on each radial edge to connect with a complementary one of the sheet holders; the work areas comprise adjacent areas around the deck surface, and each sheet holder comprises a tab designed to removably hold each radial edge of the empanada protector sheet including the flap on the deck surface, and the tab is connected to the deck surface on a radial border intermediate adjacent work areas substantially halfway from the centre of the turntable to the circumferential edge.

Each of the work areas may be one of the empanada creation and holding stations. Any of the work areas may be temporarily covered by one of the empanada protector sheets. Individual or all of the empanada protector sheets may be removed from the deck surface of each work area. Each work area may have another empanada protector sheet laid on it. In this way the empanada protector sheet may be removable and replaceable.

To create an empanada, ingredients including empanada dough and fillings may be placed upon the empanada protector sheet or directly upon the deck surface of the turntable in the work area. Before and, or after each advance of the work areas, manual and machine operations may be done on the ingredients on the work areas. In this way one empanada may be created incrementally on each work area.

The control components may advance the turntable in increments of a circle in rotation. In an embodiment of the deck surface there are four adjacent work areas which each cover a quarter of the turntable. The work area over which the flattening mechanism is mounted is separated by a third work area from the other work area over which the mould pressing mechanism is mounted. Each work area covers ninety degrees, and the turntable is advanced in increments of ninety degrees of rotation. The control components may comprise a user operable button to advance the turntable, and or the turntable may be advanced manually by a user.

The flattening mechanism and the mould pressing mechanism may be mounted on the support structure over diametrically opposed work areas on the turntable. In an embodiment of the deck surface in which there are more than four work areas, the work area over which the flattening mechanism is mounted is separated by at least a third work area from the other work area over which the mould pressing mechanism is mounted.

With each advance the work areas are advanced to the location of the next work area in the direction of rotation. Then the work areas which are under the flattening mechanism and the mould pressing mechanism are work areas which before the advance were the work areas that were adjacent to the work areas under the flattening mechanism and the mould pressing mechanism.

The support structure may comprise a bridge or gantry over the deck surface of the turntable. The support structure may include vertical and or horizontal support structures including the gantry or bridge. The flattening mechanism and or the mould pressing mechanism may be mounted on the bridge or gantry. The gantry or bridge may be a cantilever from the vertical support structure. The gantry or bridge may be connected at distal ends to vertical support structure, or to the vertical support structure and a vertical spindle about which the turntable rotates. The gantry or bridge may span the diameter of the turntable. The flattening mechanism and the mould pressing mechanism may be mounted on the support structure over diametrically opposed work areas on the turntable.

The flattening mechanism may be mounted on said horizontal support structure above said turntable. Said flattening mechanism may occupy a region about the deck surface corresponding to one said work area. The mould pressing mechanism mounted on said horizontal support structure above said turntable. Said mould pressing mechanism may occupy a region corresponding to one work area.

The mould pressing mechanism may comprise a replaceable and interchangeable mould. The system may comprise a plurality of the replaceable and interchangeable mould, one having a distinctive shape to form empanada dough folded over an edible filling into the distinctive shape. The empanada thus has the distinctive shape of the mould when manufactured.

The turntable may be circular or oval. The turntable may be polygonal. The deck surface may conform with the turntable shape and so may also be circular, oval, or polygonal. The number of polygonal edges of the turntable may be equal to the number or work areas. Preferably all corners at vertices of the polygonal edges are rounded or chamfered so that there are not any sharp corners to injure anyone working around the turn table.

All the work areas together may sum up to be the deck surface. The work areas may all have the same shape. Each work area may be disposed intermediate two other work areas. Each work area has two adjacent work areas on opposite sides in the circumferential direction of the turntable.

The work areas may comprise adjacent triangular pie slice shape areas around the deck surface. A vertex of each triangular pie slice may be the center of rotation of the turntable. Two radially aligned edges of each of the pie slices may share radially aligned edges adjacent triangular pie slice shape work areas. The third edge to the triangular shaped pie slice may comprise a segment of the edge of the turntable. The third edge may be an arc for a turntable that is round or oval. The third edge may be straight for a turntable that is polygonal and the segment is one of the sides of the polygon.

The empanada manufacturing system comprises the empanada protector sheet or a plurality of the empanada protector sheets. The empanada protector sheet(s) conform with the size and shape of the work areas. The protector sheet(s) have the triangular pie slice shape. When the empanada protector sheet is laid on a work area, the edges of the empanada protector sheet may be folded over or scrunched up to approximately conform to the size and shape of the work area upon which the empanada protector sheet is laid.

Each empanada protector sheet may cover a work area so that empanada dough and fillers may be placed on the empanada protector sheet for processes including flattening and moulding to manufacture empanadas. There may be a first empanada protector sheet laid on a first one of the work areas. There may be a second empanada protector sheet laid on a second one of the work areas. Empanada dough and fillers may make the deck surface of the work areas sticky, but the empanada protector sheets do not stick to the deck surface of the work areas and prevent the empanada dough and fillers from landing on the deck surface, thereby preventing the deck surface from becoming sticking. Upon completion of making each empanada, the empanada is on the empanada protector sheet and may be easily slid or lifted off the empanada protector sheet on the work area. Alternatively, the empanada protector sheet and empanada may be removed together from the work area. Thus, the protector sheet may also be a protective cover packaging of the empanada servable to a hungry person.

The empanada protector sheet may comprise a food-safe film such as: polymer film, pvc film, aluminum foil, non-stick paper, or waxed paper. The sheet thickness fits between the sheet holder and deck surface.

Each empanada protector sheet comprises a flap on each of two opposite edges. Each of the flaps is configured to connect to a complementary one for the sheet holders. Each of the empanada protector sheets is substantially triangular pie shaped the size of the work areas, comprising the flap on each radial edge to connect with a complimentary one of the sheet holders.

The empanada protector sheet is removable and may be non-stick to an empanada manufacturing system turntable deck surface and, or empanada dough. The empanada protector sheet is substantially triangular pie shaped. It may be isosceles.

It may have an arc shaped edge opposite a truncated triangle tip. On each of two attachable edges from the arc shaped edge to the truncated triangle tip there may be the flap. Said flap may be located substantially halfway from that truncated triangle tip to the arc shaped edge. The two attachable edges may be the isosceles edges. The attachable edges including the flap may be held by a sheet holder to removably hold the empanada protector sheet on the deck surface of the empanada manufacturing system.

Each sheet holder of the empanada manufacturing system comprises the tab or plurality of tabs connected to the deck surface. The tab(s) are disposed on a radial border intermediate adjacent work areas. The tab(s) are substantially halfway from the centre of the turntable to the circumferential edge. The sheet holder may comprise a two-wings shaped tab that is pinned between the two wings to the deck surface on the radial border. Each of the wings may be oriented to extend into one of the adjacent work areas.

The control components comprise a turntable automatic rotation control component may comprise a turntable brake component. The turntable brake component may automatically stop said turntable after one said work area advancement. The turntable automatic rotation control component may comprise electronic components allowing for the activation of the flattening mechanism and the mould pressing mechanism after said work area advancement and said work area is covered by a removable empanada protector sheet which is foldable. The turntable brake component may be comprised of a spring actuated wheel under said turntable. Said electronic components may include an electronic switch coupled to said spring actuated wheel. Said turntable lower surface may have a cavity complementary to said spring actuated wheel under each said work area. Said actuator for said flattening mechanism is pneumatically activated and said mould pressing mechanism is pneumatically activated. Said flattening mechanism may comprise a dough flattening tool to compress the empanada dough on the deck surface. The flattening mechanism may comprise a protective cap to cover the dough flattening tool. The cap may be floppy with an elasticated hem around an opening to stretch receive the dough flattening tool into the cap and un-stretch to hold the dough flattening tool within.

The control components automatic rotation control component may comprise a brake.

The brake may comprise: a spring actuated wheel which rolls on an opposite side of the turntable from the deck surface, wherein the turntable has for each work area a respective detent complementary to the spring actuated wheel to area arrest the turntable. The respective detent may comprise a cavity in the opposite side that the spring actuated wheel rolls into to arrest the turntable. There may be a motor to turn the spring actuated wheel, wherein the control components monitor for the detent to stop the motor turning the spring actuated wheel to arrest the turntable.

There may be an empanada manufacturing method. The method may comprise providing a support surface housing comprising the base holding a support structure including vertical and or horizontal support structures, and the rotatable turntable, and turntable rotation control components, the flattening mechanism and mould pressing mechanism, control electronics, and one or more user interface buttons. Said rotatable turntable may have its surface area divided into at least four of the work areas. Each said work area has a sheet holder on the deck surface. The method includes using the control components to operate enabling the flattening mechanism mounted on said horizontal support structure above said turntable to squeeze the empanada dough between the dough flattening tool and the work area on the deck surface. Said flattening mechanism may occupy a volume between the corresponding said work area and a portion of said support structure over the turntable.

The method may include providing a mould pressing mechanism mounted on said portion of support structure above said turntable, said mould pressing mechanism occupying a volume between one said work area and portion of said support structure over the turntable. The method may include automatic turntable rotation control components in concert with the flattening mechanism and mould pressing mechanism. Said method may include directing said turntable automatic rotation control component to operate the turntable brake component to automatically stop said turntable after one said work area advancement; The method may include using the control components to activate the flattening mechanism and the mould pressing mechanism after said work area advancement and said work area is covered by a removable empanada protector sheet which may be foldable. In yet another aspect, said turntable brake component may be comprised of a spring actuated wheel under said turntable. Said method may include using said control components to operate an electronic switch coupled to said spring actuated wheel. Said turntable lower surface may have a cavity complementary to said spring actuated wheel under each said work area. Said actuator for said dough flattening tool of said flattening mechanism may be pneumatically or electrically Said actuator may be pneumatically activated.

According to an aspect of the invention there is an empanada manufacturing method using the empanada manufacturing system described herein, the method comprising: laying a first empanada protector sheet on the deck surface of a first one of the work areas adjacent the work area the flattening mechanism is over; connecting the first empanada protector sheet to the sheet holder of the first one of the work areas; placing a first clump of empanada dough on the first empanada protector sheet; rotating the turntable to advance the work areas to the location of the next work area in the direction of rotation whereby the flattening mechanism is over the first one of the work areas; operating the flattening mechanism to flatten the first clump of dough; rotating turntable a second time in the same direction to advance the work areas to the location of the next work area in the direction of rotation; placing a first handful of food filling on the first clump of dough; folding half of the first clump of dough over the first handful of food filling by lifting half of the first empanada protector sheet over the first clump of dough forming a first sandwich; laying a second empanada protector sheet on the deck surface of a second one of the work areas adjacent the work area that the flattening mechanism is over; placing a second clump of empanada dough on the second empanada protector sheet; rotating the turntable a third time in the same direction to advance the work areas to the location of the next work area in the direction of rotation whereby the flattening mechanism is over the second one of the work areas and the mould pressing mechanism is over the first one of the work areas; operating the mould pressing mechanism to press a mould onto the first empanada protector sheet folded over the first sandwich to close the first filing in a first empanada; operating the flattening mechanism to flatten the second clump of dough; rotating the turntable a fourth time to advance the work areas to the location of the next work area in the direction of rotation; and removing the first empanada together with the first empanada protector sheet from the deck surface of the turntable.

Other features and advantages of the present invention will become apparent upon examining the following detailed description of an embodiment thereof, taken in conjunction with the attached drawings, which are provided for purposes of illustration and not of limitation.

The invention will now be described, by way of example only, with reference to the accompanying figures in which:

### Brief Description of the Figures

FIG. 1 shows a front perspective view of a rotary empanada machine, according to an exemplary embodiment of the invention;
FIG. 2 shows a back perspective view of the rotary empanada machine, according to an exemplary embodiment of the invention;
FIG. 3 shows a detailed perspective view of the empanada flattening portion of the rotary empanada machine, according to an exemplary embodiment of the invention;
FIG. 4 shows a perspective view of the protective cap dough flattening tool of the rotary empanada machine, according to an exemplary embodiment of the invention;
FIG. 5 shows a top view of an empanada protector sheet on work area of the deck surface of the turntable of the rotary empanada machine, according to an exemplary embodiment of the invention;
FIG. 6 shows a perspective view of the empanada protector sheet of the rotary empanada machine, according to an exemplary embodiment of the invention;
FIGS. 7 and 10 show perspective views of the turntable of the rotary empanada machine in action, according to an exemplary embodiment of the invention;
FIGS. 8 and 11 show perspectives view of the empanada mould and empanada protector sheet interaction of the rotary empanada machine, according to an exemplary embodiment of the invention;
FIG. 9 shows a perspective view of a double empanada mould interaction with the rotary empanada machine, according to an exemplary embodiment of the invention;
FIG. 12 shows a perspective view of the rotation control components mounted on top of the unit's non-rotating base, according to an exemplary embodiment of the invention; and
FIGS. 13 - 25 illustrate various views of the empanada moulds which are replaceable and interchangeable, according to exemplary embodiments of the invention.

### Detailed Description of the Invention

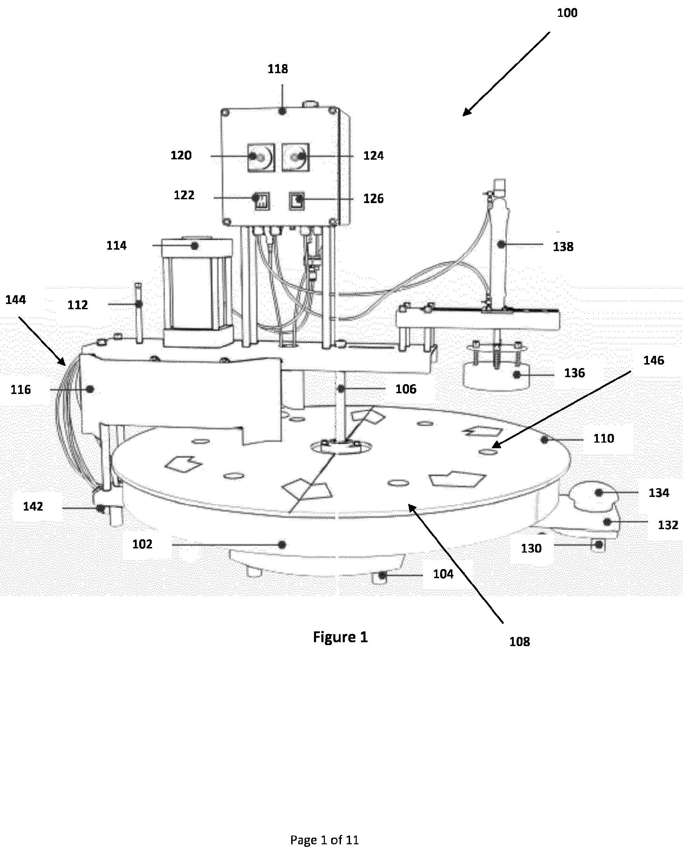

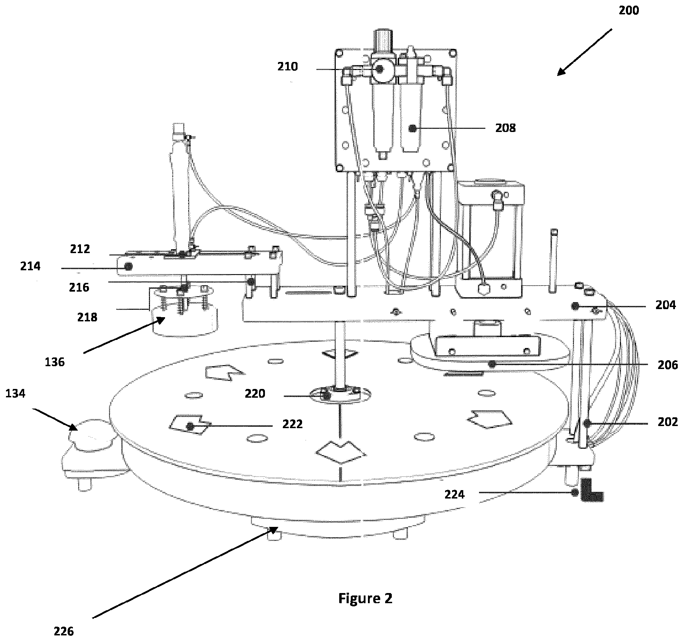

In one embodiment, referring to (FIGS. 1 - 2), we see a front view 100 and a back view 200 of the proposed rotary empanada machine comprised of a central rotatable platter or turntable 102 mounted on a central support 104 so that the turntable 102 rotates around a central axis, along which a central bar 106 protrudes. In one embodiment, said turntable 102 has a deck surface that is divided into four or more workstations or work areas 108, although there may be other number of work areas 108.

At a minimum, there is the need for a dough placement/removal workstation, a dough flattening workstation, a filling placement station and a mould pressing station. Additional 'empty' stations may be created so as to separate some of the above functions. The turntable 102 is comprised of two 110 acrylic halves as work surfaces or areas 108, although other plastic, metallic or composite surfaces may be used.

Above the turntable 102, an upper bridge 204 of a support structure is supported between said central bar 106 and one or more lateral bars 202. On said bridge, a number of components are mounted. These include an anti-rotation bar 112, an upper cylinder 114, one or more security guards 116, and an electronics control box 118. The control box 118 includes controls 120 for the flattening tool 206, the automatic/manual rotation of the platter 122, Start-up button 124, control for the mould action 126. A first one of the security guards 116 is placed on the back to cover the actions of the flattening tool 206.

A lower bridge 130 of the support structure holds a leveler 132 and a pulsating button 134 to allow turntable 102 advance. In one embodiment, the turntable 102 is braked in rotation after the width of one work area 108. Pressing the button 134 allows for the rotation/advancement of one said station. In another embodiment, the turntable rotates one work area distance and is automatically braked when the wheel 1202 presses onto the one or more turntable lower surface opening(s) 1204, followed by the activation of the flattening tool 206 and mould 136 (either automatically as the switch 1210 transitions, or as an operator presses the button 134 and the switch 1210 transitions. In another embodiment, the rotation and pressing is automatically accomplished by the control circuitry-based activation of a button or sensor. This rotation may be initiated via pneumatic pressure, or motorized or manual. To advance, the brake is released by pressing the button 134 and manually pushing the turntable 102 to rotate until the next work area 108 position advances. To facilitate centering the work area 108, an optional visible dot 146 may be used to indicate either the central area of the mould 136 or any other suitable position.

A cutting bridge 214 extends from the upper bridge 204 and supports the pressing/cutting mould 136 which extends/retracts through the actions of a small cylinder 138. Both the upper cylinder 114 and the small cylinder 138 operate off pneumatic lines 140 which couple at the base pneumatic connection 142, with pneumatic lines 144 distributing the air pressure. Note that in an alternate embodiment, the dough flattening tool and or mould 206/136 may be activated through electric motors in the flattening mechanism and mould pressing mechanism.

In looking at the back view 200, we see further details of the exemplary embodiment. We see further components mounted on the electronics control box 118, which include a pneumatic pressure meter 210, and a pneumatic oil container 208. The cutting bridge 214 holds the piston 212, which extends the cylinder 216 that actuates the connector 218 holding the mould 136. A pneumatic compressor adapter 224 connects to the pneumatic connection 142. The complete assembly mounts onto any surface (table/counter/etc.) on a non-rotating base 226.

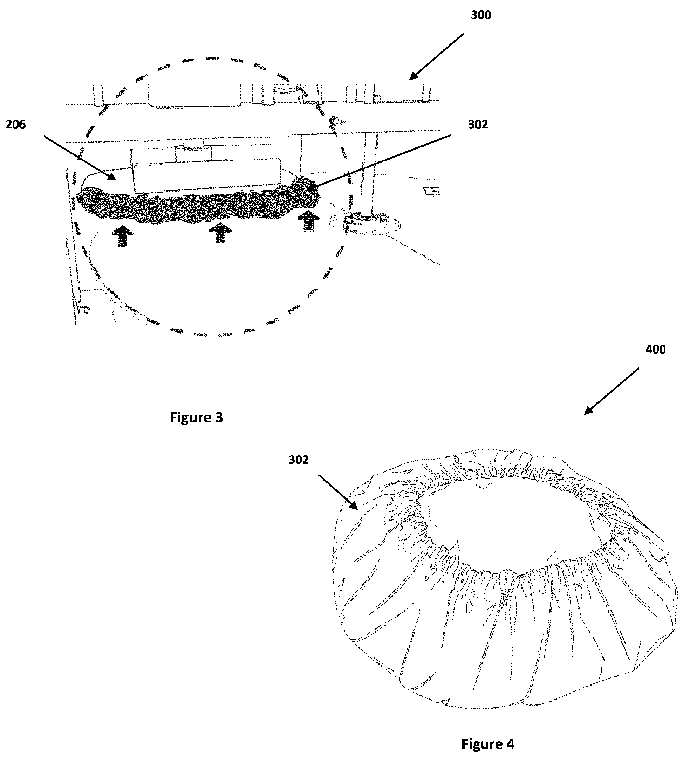

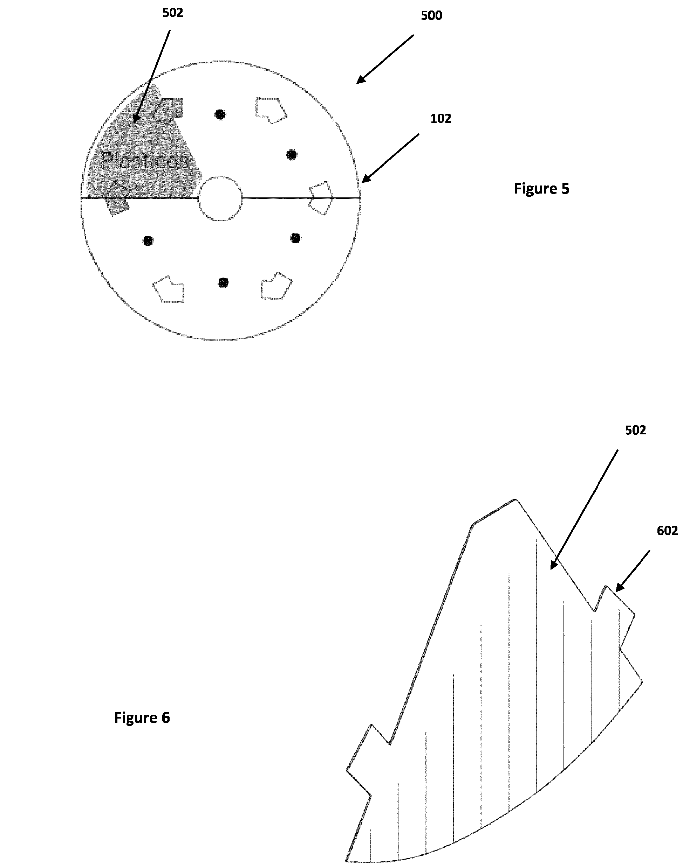

In one embodiment 300/400 (FIGS. 3 - 6), the dough flattening tool 206 is covered with a disposable plastic 'cap' 302, which tightly wraps around the flat portion of the flattening tool 206, allowing for health and easy cleaning. As seen in FIGS. 3, 5 - 6, there is a folding station 500 within the turntable 102. The turntable 102 centers on a rotating flange 220 around which the platter rotates. Each of the work areas 108 has a sheet holder 222 designed to hold each edge 602 of the empanada protector sheet 502.

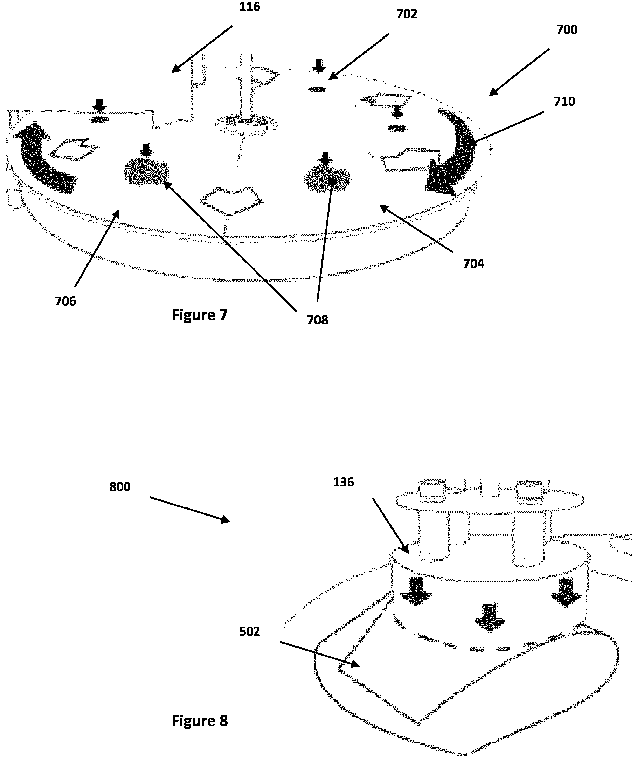

Referring to FIGS. 7 - 8, we can see the unit 700 in operation. After placing a folding plastic empanada protector sheet 502 on top of each work area, an operator places a clump of dough 708 (aka masa) into the selected initial work area. When a single operator is working, this may be the position in front of area 704 or 706. With two operators, the initial position is shown as 706 (so that a second operator is removing finished empanadas from position 702 or 704.

The amount of dough is slightly over the amount needed by the finished empanada. The height of the dough is below that of the security guard 116 entry height. Once the dough 708 is placed, the turntable 102 is advanced clockwise 710 (either through a motor, pneumatic or manual push by the operator) by a single position (702/704/708) advancement until the unit's brake stops it from further advancement. In operation, the finished empanada is lifted and replaced by the dough 708.

When the turntable 102 finishes advancing, the flattening tool 206 comes down and flattens the dough, pushing it down into a roughly spread empanada template (aka 'plantilla') of variable size and thickness determined by how long the piston comes out of the upper cylinder 114. Once the flattening tool 206 and mould 136 retract, the turntable 102 brake releases allowing for the operators to rotate (or alternatively the pneumatic/motor advances) the turntable 102.

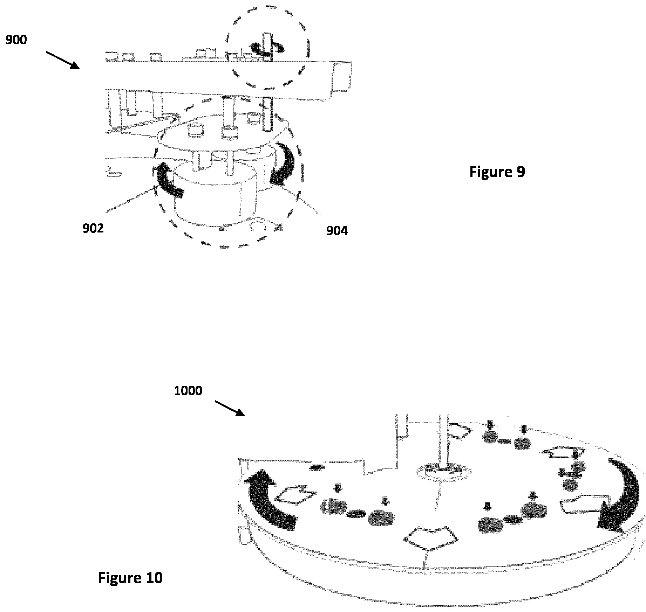

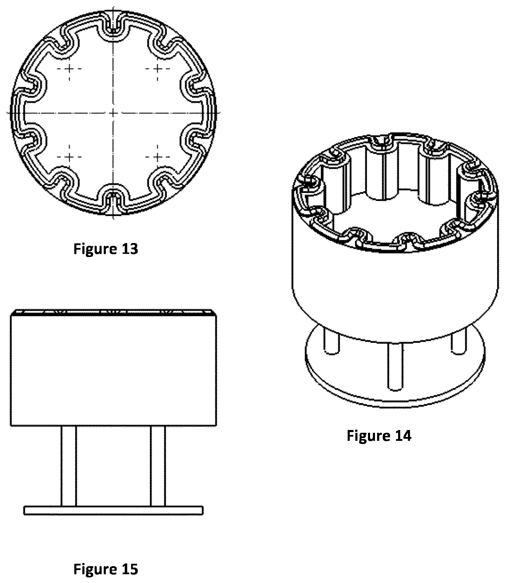

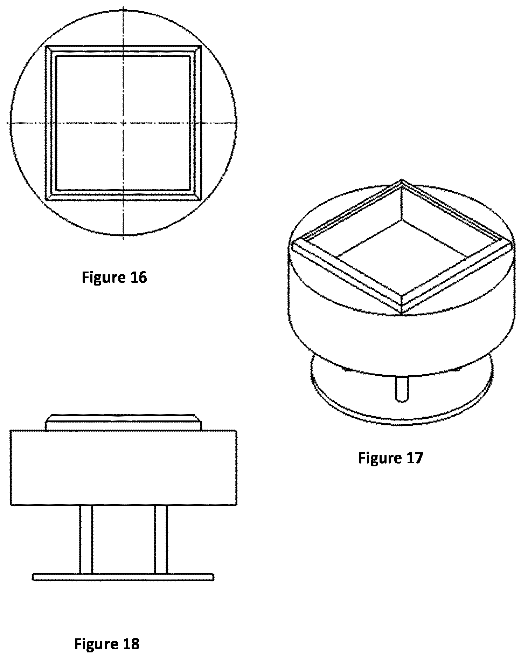

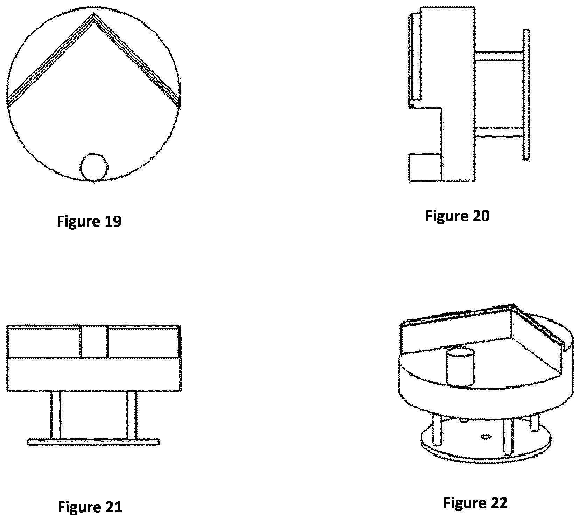

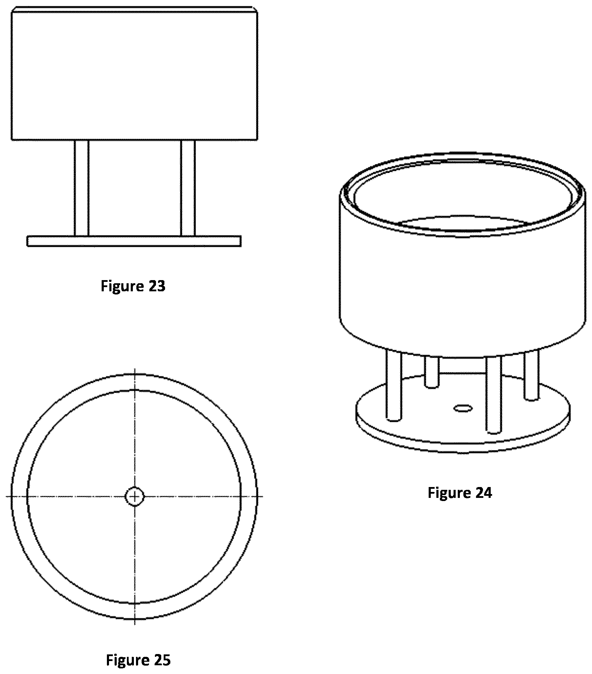

Once flattened, the turntable advances, placing the flattened template outside the safety area (delimited by the safety shield(s) 116), where an operator places the empanada filling within the template (at station 702) and folds the empanada protector sheet 502. Once the turntable 102 advances next, the mould 136 presses down the empanada protector sheet 502 as shown in Figure 8 with the mould 136 in the down configuration 800. Based on the shape of the mould, the folded template is pressed into the surface, in effect cutting the empanada shape. Once the empanada protector sheet is opened, the empanada is extracted, and the left-over template material is removed. The empanada protector sheet 502 is unfolded and the cycle begins again. The mould's 136 internal volume is shaped as desired, including half-moon (traditional empanada shape) as well as others. In an alternate embodiment, two empanadas are made at the same time (side-by-side) using special moulds (FIGS. 9, 11 and 13 - 25).

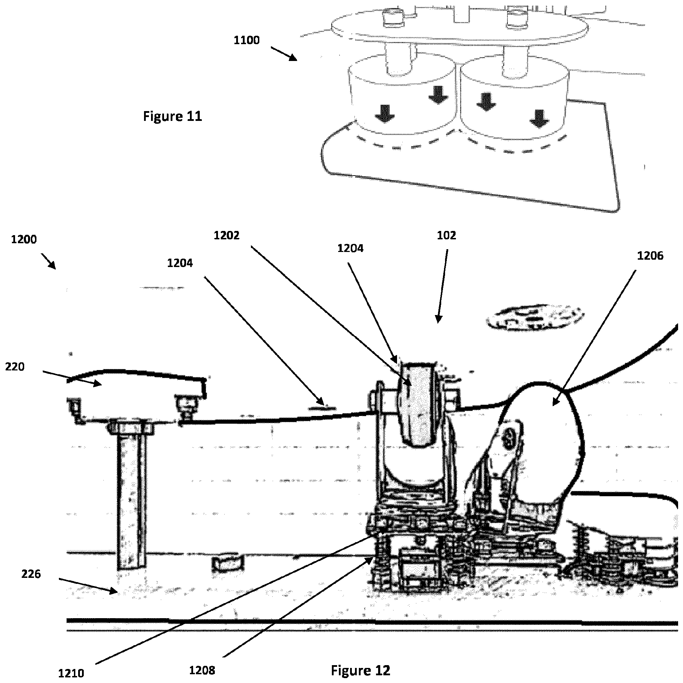

Referring to FIG. 12, we see details of the rotation fixation and/or activation mechanism 1200 for the turntable 102. Located between the bottom of the turntable 102 and the base 226, are two or more wheels 1206 in contact with the lower portion of the turntable 102 to support the weight and prevent any wobbling in rotation when the pressing components (flattening tool 206 and mould 136) are activated. When a motor or pneumatics are used to move the turntable, a simpler encoder or switch(es) on the rotating flange indicate when the turntable 102 is in a position to activate the pressing components 206/136 or others.

But there is a cheaper and simpler embodiment that is envisioned. In this mode, a human provides the initial displacement of the turntable 102 to advance the work area 108 to the next stage (by rotating the turntable by hand 102), but the turntable is automatically stopped when one work area has been advanced. This could happen as above (encoder/switch on the flange) and a hook/pin or other insertion when the area has been advanced to the next stage.

In another embodiment 1200 a displacement wheel 1202 in contact with the bottom of the turntable 102 goes into an opening 1204 located in the surface below the turntable 102. The wheel is kept pressed against the bottom via a spring 1208 and has a switch 1210 which opens/closes when the wheel 1202 displaces up/down (or vice-versa). The entry of the wheel 1202 into the opening 1204 both stops the turntable 102 and lets the control electronics know it is time to activate the pressing components 206/136 or others. In yet another embodiment, the wheel 1202 stops rotation and the operator activates the pressers 206/136 via activation of the button 130. Note that to rotate to the next position, the operator needs only overcome the pressure of the spring 1208 by pushing for rotation and releasing once the turntable rotates freely.

The foregoing is considered as illustrative of the principles of the invention. Since numerous modifications and changes will readily occur to those skilled in the art, it is not desired to limit the invention to the exact construction and operation shown and described, and accordingly, all suitable modifications and equivalents may be resorted to, falling within the scope of the claims.

## Claims

1. An empanada manufacturing system comprising:
a base (226) holding a support structure (104, 204, 214) and a turntable (102) that is rotatable with respect to the base and support structure (104);
a plurality of empanada protector sheets (502);
wherein said turntable has a deck surface divided into at least four work areas (108, 702, 704, 706), each said work area having a sheet holder (222) to hold one of the empanada protector sheets on the deck surface of the respective work area; a flattening mechanism (206) to flatten empanada dough on the deck surface, said flattening mechanism mounted on said support structure (204)over one of the work areas;
a mould pressing mechanism (136, 138) to mould the empanada dough on the deck surface, said mould pressing mechanism mounted on said support structure over another of the work areas; and
control components (118, 120) to rotate the turntable to advance the work areas to the location of the next work area in the direction of rotation and then operate the flattening mechanism and mould pressing mechanism in repetitive sequence, said control components comprising a brake (1202, 1204, 1208) that automatically arrests rotation of the turntable after each work area advances to the location of the next work area in the direction of rotation,
**characterised in that**
the empanada protector sheets (502) are substantially triangular pie shaped the size of the work areas, comprising a flap (602) on each radial edge to connect with a complementary one of the sheet holders;
the work areas comprise adjacent areas around the deck surface, and each sheet holder (222) comprises a tab designed to removably hold each radial edge of the empanada protector sheet including the flap on the deck surface, and the tab is connected to the deck surface on a radial border intermediate adjacent work areas substantially halfway from the centre of the turntable to the circumferential edge.

2. An empanada manufacturing system according to claim 1 wherein the work area over which the flattening mechanism (206) is mounted is separated by at least a third work area from the other work area over which the mould pressing mechanism (136) is mounted.

3. An empanada manufacturing system according to claim 1 or 2 wherein the flattening mechanism (206) and the mould pressing mechanism (136) are mounted on the support structure (204, 214) over diametrically opposed work areas on the turntable.

4. An empanada manufacturing system according to any preceding claim wherein the turntable (102) is circular.

5. An empanada manufacturing system according to any preceding claim wherein the brake (1202, 1204, 1208) comprises: a spring actuated wheel (1202) which rolls on an opposite side of the turntable from the deck surface, wherein the turntable has for each work area a respective detent (1204) complementary to the spring actuated wheel to area arrest the turntable.

6. An empanada manufacturing system according to any preceding claim wherein the respective detent (1204) comprises a cavity in the opposite side that the spring actuated wheel rolls into to arrest the turntable.

7. An empanada manufacturing system according to claim 5 or 6 comprising a motor to turn the spring actuated wheel (1202), wherein the control components (118) monitor for the detent (1204) to stop the motor turning the spring actuated wheel to arrest the turntable.

8. An empanada manufacturing system according to any preceding claim wherein the sheet holder (222) comprises a two-wings shaped tab that is pinned between the two wings to the deck surface on the radial border, each of the wings oriented to extend into one of the adjacent work areas (704, 706).

9. An empanada manufacturing system according to any preceding claim wherein there are first and second ones of the empanada protector sheets (502) laid on at least two of the work areas.

10. An empanada manufacturing method using the empanada manufacturing system according to any of claims 1 to 9 comprising:
laying a first empanada protector sheet (502) on the deck surface of a first one of the work areas (702) adjacent the work area the flattening mechanism (206) is over;
connecting the first empanada protector sheet (502) to the sheet holder (222) of the first one of the work areas;
placing a first clump (708) of empanada dough on the first empanada protector sheet;
rotating the turntable (102) to advance the work areas (702, 704, 706) to the location of the next work area in the direction of rotation (710) whereby the flattening mechanism (206) is over the first one of the work areas;
operating the flattening mechanism (206) to flatten the first clump of dough;
rotating turntable (102) a second time in the same direction (710) to advance the work areas to the location of the next work area in the direction of rotation;
placing a first handful of food filling on the first clump of dough;
folding half of the first clump of dough over the first handful of food filling by lifting half of the first empanada protector sheet over the first clump of dough forming a first sandwich;
laying a second empanada protector sheet on the deck surface of a second one of the work areas adjacent the work area that the flattening mechanism (206) is over;
placing a second clump of empanada dough on the second empanada protector sheet;
rotating the turntable a third time in the same direction (710) to advance the work areas (702, 704, 706) to the location of the next work area in the direction of rotation whereby the flattening mechanism (206) is over the second one of the work areas and the mould pressing mechanism is over the first one of the work areas;
operating the mould pressing mechanism (136, 138) to press a mould onto the first empanada protector sheet folded over the first sandwich to close the first filing in a first empanada;
operating the flattening mechanism (206) to flatten the second clump of dough;
rotating the turntable a fourth time to advance the work areas to the location of the next work area in the direction of rotation (710); and
removing the first empanada together with the first empanada protector sheet (502) from the deck surface of the turntable (102).

## Patentansprüche

1. Fertigungssystem zur Herstellung von Empanadas bestehend aus:
einer Standfläche (226), die eine Haltekonstruktion (104, 204, 214) sowie eine Drehscheibe (102) trägt, welche gegenüber Standfläche und die Haltekonstruktion (104) drehbar ist;
einer Vielzahl von Empanada-Schutzfolien (502);
wobei die genannte Drehscheibe eine Deckfläche unterteilt in mindestens vier Arbeitsbereiche (108, 702, 704, 706) umfasst und jede der genannten Arbeitsbereiche einen Schutzfolienhalter (222) aufweist, der je eine Empanada-Schutzfolie auf der Deckfläche im jeweiligen Arbeitsbereich festhält; einem Flachdrückmechanismus (206), welcher den Empanada-Teig auf der Deckfläche der Drehscheibe flachdrückt, wobei der genannte Flachdrückmechanismus an der genannten Haltekonstruktion (204) über einem der Arbeitsbereiche angebracht ist;
einem Formpressmechanismus (136, 138), der den Empanada-Teig auf der Deckfläche in Form presst, wobei der genannte Formpressmechanismus an der genannten Haltekonstruktion über einem der anderen Arbeitsbereiche angebracht ist; und
Steuerungskomponenten (118, 120) zur Drehung der Drehscheibe, sodass sich die Arbeitsbereiche in Drehrichtung zum Standort des nächsten Arbeitsbereichs bewegen, und der Flachdrückmechanismus sowie der Formpressmechanismus in wiederholter Abfolge durchgeführt werden können, wobei die genannten Steuerungskomponenten eine Bremse (1202, 1204, 1208) umfassen, welche die Drehbewegung der Drehscheibe automatisch stoppt, nachdem jeder Arbeitsbereich zum Standort des nächsten Arbeitsbereichs in Drehrichtung bewegt wurde,
**dadurch gekennzeichnet, dass**
die Empanada-Schutzfolien (502) im Wesentlichen eine dreieckige, tortenstückartige Form in der Größe der Arbeitsbereiche aufweisen und eine Lasche (602) an beiden radialen Kanten umfassen, damit diese mit einem entsprechenden Schutzfolienhalter verbunden werden können;
die Arbeitsbereiche umfassen angrenzende Bereiche rund um die Deckfläche und jeder Schutzfolienhalter (222) umfasst ein Verbindungsstück, sodass jede radiale Kante der Empanada-Schutzfolie einschließlich der Lasche abnehmbar auf der Deckfläche befestigt werden kann, und dass das Verbindungsstück mit der Deckfläche an einer radialen Begrenzung zwischen den aneinandergrenzenden Arbeitsbereichen verbunden ist und sich im Wesentlichen auf halber Strecke zwischen der Mitte und dem Außenrand der Drehscheibe befindet.

2. Ein Fertigungssystem zur Herstellung von Empanadas nach Anspruch 1, wobei der Arbeitsbereich, über dem der Flachdrückmechanismus (206) angebracht ist, mindestens einen dritten Arbeitsbereich von dem anderen Arbeitsbereich entfernt ist, über dem der Formpressmechanismus (136) angebracht ist.

3. Ein Fertigungssystem zur Herstellung von Empanadas nach Anspruch 1 oder 2, wobei der Flachdrückmechanismus (206) und der Formpressmechanismus (136) an der Haltekonstruktion (204, 214) über sich auf der Deckfläche diametral gegenüberliegenden Arbeitsbereichen angebracht sind.

4. Ein Fertigungssystem zur Herstellung von Empanadas nach einem vorangegangenen Anspruch, wobei die Drehscheibe (102) kreisförmig ist.

5. Ein Fertigungssystem zur Herstellung von Empanadas nach einem vorangegangenen Anspruch, wobei die Bremse (1202, 1204, 1208) aus Folgendem besteht: einem federbetätigten Rad (1202), welches auf der gegenüberliegenden Seite der Drehscheibe von der Deckfläche rollt, wobei die Drehscheibe für jeden Arbeitsbereich eine entsprechende Arretierung (1204) aufweist, ergänzend zum federbetätigten Rad, um die Drehscheibe zu arretieren.

6. Ein Fertigungssystem zur Herstellung von Empanadas nach einem vorangegangenen Anspruch, wobei die jeweilige Arretierung (1204) einen Hohlraum auf der gegenüberliegenden Seite umfasst, in den das federbetätigte Rad rollt, um die Drehscheibe zu arretieren.

7. Ein Fertigungssystem zur Herstellung von Empanadas nach Anspruch 5 oder 6, welches einen Motor zur Drehung des federbetätigten Rads (1202) umfasst, wobei die Steuerungskomponenten (118) die Arretierung (1204) steuern, sodass diese den Motor zur Drehung des federbetätigten Rads stoppt, um die Drehscheibe zu arretieren.

8. Ein Fertigungssystem zur Herstellung von Empanadas nach einem vorangegangenen Anspruch, wobei der Schutzfolienhalter (222) ein zweiflügeliges Verbindungsstück umfasst, das zwischen den beiden Flügeln der Deckfläche an der radialen Begrenzung festgesteckt ist, wobei jeder Flügel so ausgerichtet ist, dass er sich in einen der angrenzenden Arbeitsbereiche erstreckt (704, 706).

9. Ein Fertigungssystem zur Herstellung von Empanadas nach einem vorangegangenen Anspruch, wobei erste und zweite Empanada-Schutzfolien (502) auf mindestens zwei der Arbeitsbereichen aufgelegt sind.

10. Ein Verfahren zur Herstellung von Empanadas unter Verwendung des Fertigungssystems zur Herstellung von Empanadas nach einem der Ansprüche 1 bis 9 bestehend aus:
dem Auflegen einer ersten Empanada-Schutzfolie (502) auf einen ersten der Arbeitsbereiche auf der Deckfläche (702), angrenzend an den Arbeitsbereich, über dem sich der Flachdrückmechanismus (206) befindet;
dem Verbinden der ersten Empanada-Schutzfolie (502) mit dem Schutzfolienhalter (222) des ersten der Arbeitsbereiche;
dem Platzieren einer ersten Portion Empanada-Teig (708) auf der ersten Empanada-Schutzfolie;
dem Drehen der Drehscheibe (102) zur Vorwärtsbewegung der Arbeitsbereiche (702, 704, 706) in Drehrichtung (710) zum Standort des nächsten Arbeitsbereichs, wobei sich der Flachdrückmechanismus (206) über dem ersten der Arbeitsbereiche befindet;
dem Betätigen des Flachdrückmechanismus (206) zum Flachdrücken der ersten Portion Teig;
dem Drehen der Drehscheibe (102) zum zweiten Mal in dieselbe Richtung (710) zur Vorwärtsbewegung der Arbeitsbereiche in Drehrichtung zum Standort des nächsten Arbeitsbereichs;
dem Platzieren einer ersten Handvoll Füllung auf der ersten Portion Teig;
dem Falten der ersten Portion Teig über der ersten Handvoll Füllung durch Anheben der Hälfte der ersten Empanada-Schutzfolie über der ersten Portion Teig, sodass diese zusammengeklappt wird;
dem Auflegen einer zweiten Empanada-Schutzfolie auf einen zweiten Arbeitsbereich auf der Deckfläche, angrenzend an den Arbeitsbereich, über dem sich der Flachdrückmechanismus (206) befindet;
dem Platzieren einer zweiten Portion Empanada-Teig auf der zweiten Empanada-Schutzfolie;
dem Drehen der Drehscheibe zum dritten Mal in dieselbe Richtung (710) zur Vorwärtsbewegung der Arbeitsbereiche (702, 704, 706) in Drehrichtung zum Standort des nächsten Arbeitsbereichs, wobei sich der Flachdrückmechanismus (206) über dem zweiten der Arbeitsbereiche und der Formpressmechanismus sich über dem ersten der Arbeitsbereiche befindet;
dem Betätigen des Formpressmechanismus (136, 138), um eine Form auf die erste Empanada-Schutzfolie zu pressen, die über den ersten zusammengeklappten Teig gefaltet ist, sodass die erste Füllung in einer ersten Empanada verschlossen wird;
dem Betätigen des Flachdrückmechanismus (206) zum Flachdrücken der zweiten Portion Teig;
dem Drehen der Drehscheibe zum vierten Mal in dieselbe Richtung zur Vorwärtsbewegung der Arbeitsbereiche in Drehrichtung (710) zum Standort des nächsten Arbeitsbereichs; und
dem Entfernen der ersten Empanada zusammen mit der ersten Empanada-Schutzfolie (502) von der Deckfläche der Drehscheibe (102).

## Revendications

1. Un système de fabrication d'empanadas incluant :
une base (226) avec une structure de soutien (104, 204, 214) et un plateau (102) dont la base et la structure de soutien (104) sont rotatives ;
plusieurs feuilles de protection des empanadas (502) ;
où le plateau a une plateforme divisée en au moins quatre zones de travail (108, 702, 704, 706), où chacune est dotée d'un support de feuille (222) pour maintenir l'une des feuilles de protection des empanadas sur la plateforme de chaque zone de travail respective ; un mécanisme de laminage (206) pour aplatir la pâte à empanada sur la plateforme, ledit mécanisme de laminage est monté sur la structure de soutien (204) sur l'une des zones de travail ;
un mécanisme de pressage du moule (136, 138) pour mouler la pâte à empanada sur la plateforme, ledit mécanisme de pressage du moule est monté sur la structure de soutien sur une autre surface de travail ;
des composants de commande (118, 120) pour faire tourner le plateau afin de faire avancer les zones de travail jusqu'à la zone de travail suivante dans le sens de la rotation, puis pour actionner le mécanisme de laminage et le mécanisme de pressage du moule de manière répétée, lesdits composants de commande incluent un frein (1202, 1204, 1208) qui arrête automatiquement la rotation du plateau lorsque chaque zone de travail avance jusqu'à l'emplacement de la prochaine dans le sens de la rotation,
étant **caractérisé en ce que**
les feuilles de protection des empanadas (502) ont une forme triangulaire de part de tarte de la taille des zones de travail, incluant un rabat (602) sur chaque bord radial pour faire la jonction avec l'un des supports de feuille complémentaires ;
les zones de travail sont constituées des zones adjacentes autour de la plateforme et chacun des supports de feuille (222) comporte une languette conçue pour tenir de manière amovible chaque bord radial de la feuille de protection de l'empanada, incluant le rabat sur la plateforme et la languette est reliée à la plateforme sur un bord radial adjacent aux zones de travail à mi-chemin du centre du plateau et du bord périphérique.

2. Un système de fabrication d'empanadas selon la revendication 1 où la surface de travail, sur laquelle le mécanisme de laminage (206) est monté, est séparée par au moins une troisième zone de travail de l'autre zone de travail sur laquelle le mécanisme de pressage du moule (136) est monté.

3. Un système de fabrication d'empanadas selon la revendication 1 ou 2 où le mécanisme de laminage (206) et le mécanisme de pressage du moule (136) sont montés sur la structure de soutien (204, 214) sur des zones de travail diamétralement opposées sur le plateau.

4. Un système de fabrication d'empanadas selon les revendications précédentes où le plateau (102) est circulaire.

5. Un système de fabrication d'empanadas selon les revendications précédentes où le frein (1202, 1204, 1208) inclut : une roue actionnée par un ressort (1202) qui roule sur un côté opposé du plateau de la plateforme, où le plateau comporte un cran (1204) par zone de travail respective complémentaire à la roue actionnée par un ressort pour stopper le plateau dans la zone.

6. Un système de fabrication d'empanadas selon les revendications précédentes où le cran respectif (1204) inclut une cavité sur le côté opposé dans laquelle la roue actionnée par le ressort s'insère pour arrêter le plateau.

7. Un système de fabrication d'empanadas selon les revendications 5 ou 6 incluant un moteur pour faire tourner la roue actionnée par le ressort (1202), où les composants de commande (118) contrôlent le cran (1204) pour stopper le moteur de la roue actionnée par le ressort afin d'arrêter le plateau.

8. Un système de fabrication d'empanadas selon les revendications précédentes où le support de feuille (222) inclut une languette en forme de deux ailettes fixée entre les deux ailettes à la plateforme sur le bord radial, chacune des ailettes est orientée pour s'étendre dans l'une des zones de travail adjacentes (704, 706).

9. Un système de fabrication d'empanadas selon les revendications précédentes où la première et la deuxième feuille de protection des empanadas (502) sont posées sur au moins deux des zones de travail.

10. Une méthode de fabrication d'empanadas utilisant le système de fabrication d'empanadas selon l'une des revendications 1 à 9 incluant :
poser une première feuille de protection des empanadas (502) sur la plateforme de la première zone de travail (702) adjacente à la zone de travail sur laquelle se trouve le mécanisme de laminage (206) ;
relier la première feuille de protection des empanadas (502) au support de feuille (222) de la première zone de travail ;
placer une première boule (708) de pâte à empanadas sur la première feuille de protection des empanadas ;
faire tourner le plateau (102) pour faire avancer les zones de travail (702, 704, 706) jusqu'à l'emplacement de la prochaine zone de travail dans le sens de la rotation (710) où le mécanisme de laminage (206) se trouve au-dessus de la première zone de travail ;
actionner le mécanisme de laminage (206) pour aplatir la première boule de pâte ;
faire tourner le plateau (102) une deuxième fois dans le même sens (710) pour faire avancer les zones de travail jusqu'à l'emplacement de la zone de travail suivante dans le sens de rotation ;
placer la première dose de farce sur la première boule de pâte ;
plier la moitié de la première boule de pâte sur la première dose de farce en levant la moitié de la première feuille de protection des empanadas sur la première boule de pâte pour former un premier sandwich ;
poser une deuxième feuille de protection des empanadas sur la plateforme d'une deuxième zone de travail adjacente à la zone de travail sur laquelle se trouve le mécanisme de laminage (206) ;
placer une deuxième boule de pâte à empanadas sur la deuxième feuille de protection des empanadas ;
faire tourner le plateau une troisième fois dans le même sens (710) pour faire avancer les zones de travail (702, 704, 706) jusqu'à l'emplacement de la prochaine zone de travail dans le sens de la rotation où le mécanisme de laminage (206) se trouve au-dessus de la deuxième zone de travail et le mécanisme de pressage du moule se trouve au-dessus de la première zone de travail ;
actionner le mécanisme de pressage du moule (136, 138) pour presser un moule sur la première feuille de protection des empanadas pliée au-dessus du premier sandwich pour enfermer la première dose de farce dans une première empanada ;
actionner le mécanisme de laminage (206) pour aplatir la deuxième boule de pâte ;
faire tourner le plateau une quatrième fois pour faire avancer les zones de travail jusqu'à l'emplacement de la prochaine zone de travail dans le sens de rotation (710) ;
enlever la première empanada avec la première feuille de protection des empanadas (502) de la plateforme sur le plateau (102).
